# FASCICULE DE BREVET EUROPEEN

(11) **EP 3 586 184 B1**
(45) Date de publication et mention de la délivrance du brevet: **21.04.2021**
(21) Numéro de dépôt: 18705965.4
(22) Date de dépôt: 31.01.2018
(51) Int. Cl.: G02B 27/01

(54) **DISPOSITIF D'AFFICHAGE A LAME ESCAMOTABLE DOTE DE MOYENS MANUELS D'ESCAMOTAGE**
ANZEIGEVORRICHTUNG MIT EINER EINZIEHBAREN PLATTE MIT MANUELLEM RETRAKTIONSMITTEL
DISPLAY DEVICE WITH A RETRACTABLE PLATE COMPRISING MANUAL RETRACTING MEANS

(30) Priorité: 24.02.2017 FR 1751470
(43) Date de publication de la demande: 01.01.2020
(73) Titulaire: PSA Automobiles SA, 78300 Poissy (FR)
(72) Inventeur: MONRIQUE, Herve, 25460 Etupes (FR)
(86) Numéro de dépôt international: PCT/FR2018/050233
(87) Numéro de publication internationale: WO 2018/154205

(56) Documents cités:
- WO-A1-2013/059655
- WO-A1-2016/051117
- GB-A- 1 369 215

## Description

### Domaine de l'invention

La présente invention concerne d'une manière générale les dispositifs d'affichage à lame escamotable pour véhicules automobiles, et plus particulièrement un tel dispositif de type afficheur tête-haute.

### Arrière-plan de l'invention

Dans le cadre de l'amélioration de la sécurité routière, les constructeurs d'automobiles utilisent depuis quelques années des dispositifs d'affichage tête haute désignés généralement sous les acronymes VTH (pour Afficheur Vision Tête Haute) ou HUD (pour Head Up Display) et permettant de projeter des informations dans le champ de vision du conducteur devant le véhicule automobile.

Ce type de dispositif d'affichage comporte un module de projection implanté sous la planche de bord et destiné à projeter une image source porteuse d'informations jusqu'à un élément transparent apte à réfléchir une partie des rayons lumineux provenant de ce module de projection vers le conducteur du véhicule automobile de sorte que ce dernier visualise ces informations sous la forme d'une image virtuelle située quelques mètres au devant du véhicule dans une zone surmontant le capot ou la route et sans modification de l'accommodation des yeux.

Certains dispositifs d'affichage utilisent le pare-brise comme élément transparent semi-réfléchissant ce qui permet de limiter de nombre de composants nécessaires. Toutefois, l'inclinaison du pare-brise doit satisfaire à certains critères aérodynamiques et de style qui ne sont pas forcément compatibles avec un affichage de l'ensemble de l'image virtuelle dans le champ de vision du conducteur.

Pour cette raison, certains véhicules automobiles ont été équipés de dispositifs à vision tête haute comportant une lame indépendante du pare-brise et apte à réfléchir au moins une partie du faisceau provenant du module de projection vers l'utilisateur.

La demande de brevet internationale WO 2012/007305 décrit un dispositif d'affichage tête haute à lame escamotable comportant un boîtier logeant le module de projection et destiné à être implanté sur la planche de bord d'un véhicule automobile au niveau d'une découpe ménagée dans cette dernière, ainsi qu'une lame montée sur un support mobile de sorte à pouvoir être déplacée, via un mécanisme motorisé à engrenage logé dans le boîtier, entre une position de rangement et au moins une position d'affichage, de sorte que la lame soit escamotée à l'intérieur du boîtier lorsque le support mobile occupe sa position de rangement et qu'elle soit déployée hors du boîtier lorsque ce support mobile occupe sa position d'affichage.

Le mécanisme motorisé comporte, de part et d'autre de la lame, une première bielle solidaire du support de lame et une seconde bielle qui est reliée à la première bielle par une articulation située à l'une de leurs extrémités. L'autre extrémité de la première bielle est logée mobile en rotation sur un premier palier déplaçable en translation par un moteur électrique, tandis que l'autre extrémité de la seconde bielle est logée mobile en rotation sur un second palier fixe par rapport au boîtier. Pour amener le support de lame depuis sa position de rangement à sa position d'affichage, le moteur fait tourner un pignon, ce qui entraîne le déplacement du premier palier sur une crémaillère et donc le soulèvement de ce support de lame.

Pour des raisons esthétiques, la planche de bord est généralement surmontée, au niveau de la découpe recevant le dispositif d'affichage, d'une visière d'habillage destinée à masquer partiellement ce dispositif d'affichage ainsi que les points de fixation de ce dernier sur la structure du véhicule, cette visière présentant une ouverture destinée à permettre le passage des rayons lumineux émis par le module de projection et celui de la lame lors de son déploiement.

En cas de défaillance du moteur électrique du mécanisme, il est nécessaire de pouvoir extraire le dispositif tête haute de la planche de bord afin de le réparer ou le remplacer.

Afin d'avoir accès aux vis de fixation du boîtier sur la structure, la visière d'habillage doit être préalablement retirée. Malheureusement, lorsque le support de lame occupe sa position d'affichage, la proximité entre l'extrémité supérieure de cette lame et le pare-brise empêche le retrait de la visière

La demande de brevet WO 2013/3059655 A1 décrit un système avec une lame escamotable. Les documents WO 2016/051117 A1 et GB 1 369 215 décrivent des dispositifs d'affichage ayant une commande manuelle de la position d'un élément d'affichage.

### Obiet et résumé de l'invention

La présente invention vise donc à permettre à un opérateur d'escamoter au moins partiellement la lame à l'intérieur du boîtier afin d'autoriser le retrait de la visière d'habillage et de permettre le démontage du dispositif d'affichage.

Elle propose à cet effet un dispositif d'affichage à lame escamotable comportant un boîtier destiné à être implanté sur la planche de bord d'un véhicule automobile, ainsi qu'une lame montée sur un support mobile de sorte à pouvoir être déplacée, via un mécanisme motorisé à engrenage logé dans ledit boîtier et comprenant au moins un pignon, entre une position de rangement et au moins une position d'affichage, de sorte que ladite lame soit escamotée à l'intérieur dudit boîtier lorsque ledit support mobile occupe sa position de rangement et qu'elle soit déployée hors dudit boîtier lorsque ce support mobile occupe sa position d'affichage ;

caractérisé en ce qu'il comporte des moyens de commande manuels dudit mécanisme comprenant au moins une roulette liée en rotation avec un dit pignon et accessible depuis l'extérieur dudit boîtier, ledit mécanisme comporte deux roues dentées latérales articulées chacune avec une extrémité latérale correspondante dudit support et étant solidaires en rotation l'une de l'autre par l'intermédiaire d'une tige de synchronisation transversale (26) portant fixement à ses deux extrémités opposées deux dits pignons (27) engrainés chacun sur une dite roue dentée correspondante (20), ladite tige de synchronisation transversale 26 s'étendant entre deux coins inférieurs arrière de deux châssis latéraux 21 sur lesquels elle est montée à libre rotation.

En cas de défaillance du moteur électrique, un opérateur peut ainsi, sans avoir recours à un accessoire ou outil particulier mais en entrainant simplement cette roulette à rotation avec l'un de ses doigts, commander manuellement et le mécanisme gérant le déplacement du support de sorte à escamoter au moins partiellement la lame pour que cette dernière ne s'oppose plus au retrait de la visière d'habillage et permette le démontage du dispositif d'affichage.

Selon des caractéristiques préférées du dispositif d'affichage :
- la au moins dite roulette est montée fixement sur ladite tige de synchronisation transversale ;
- ledit boîtier présente au moins un renfoncement s'étendant jusqu'au niveau de ladite tige de synchronisation transversale et dans lequel est ménagé une fenêtre partiellement traversée par une dite roulette correspondante ;
- ce dispositif comporte deux dites roulettes disposées contre la face interne des deux dits pignons ;
- ledit mécanisme comporte un moteur électrique doté d'un arbre rotatif couplé à l'une des dites roues dentées par un système réducteur ;
- la au moins dite roulette présente une pluralité de crans moletés destinés à faciliter sa manipulation par le doigt d'un opérateur ;
- la au moins dite roulette est venue d'une seule pièce par moulage avec un dit pignon correspondant ; et/ou
- ce dispositif un module de projection tête-haute logé dans ledit boîtier et apte à projeter une image source porteuse d'informations relatives à la conduite et/ou au fonctionnement du véhicule jusqu'à ladite lame, cette dernière étant suffisamment réfléchissante pour renvoyer une partie des rayons lumineux provenant dudit module de projection vers le conducteur.

L'invention vise également sous un second aspect, un véhicule automobile comportant un tel dispositif d'affichage.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 représente une vue de face de la partie de la planche de bord d'un véhicule automobile accueillant le dispositif d'affichage selon l'invention dont le support de lame occupe sa position d'affichage ;
- la figure 2 est une vue en coupe transversale prise selon le plan II-II de la figure 1 ;
- la figure 3 représente une vue similaire à la figure 2 mais sur laquelle le support de lame occupe sa position de rangement après l'escamotage de la lame ;
- la figure 4 est une vue similaire à la figure 1 après le retrait de la visière d'habillage ;
- la figure 5 est une vue en perspective du dispositif d'affichage selon l'invention sur laquelle le boîtier et le module de projection ne sont pas représentés pour une meilleure compréhension ; et
- la figure 6 est un agrandissement du détail VI de la figure 5 sur lequel l'un des châssis latéraux n'est pas représenté pour mieux visualiser certains éléments du mécanisme de déplacement du support de lame.

### Description détaillée d'un mode préféré de réalisation

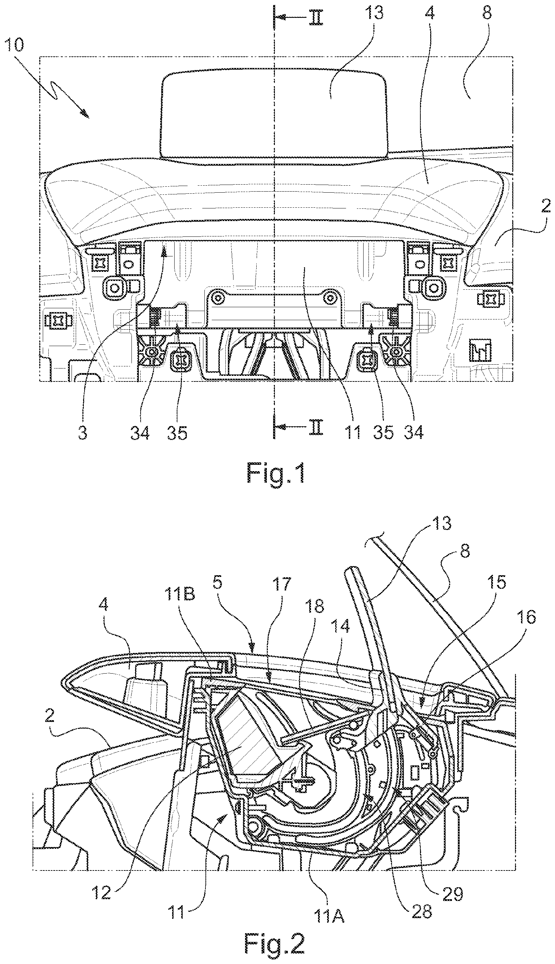

Les figures 1 à 4 représentent une partie de planche de bord 2 d'un véhicule automobile intégrant un dispositif d'affichage 10 selon l'invention et destinée à accueillir également en façade un combiné d'instruments (non représenté sur ces figures).

Dans la description qui va suivre et par convention, les termes les termes « avant », « arrière », « inférieur », « supérieur » et « transversal » seront définis par rapport à la position de montage de ce dispositif d'affichage 10 dans le véhicule.

Ce dispositif d'affichage 10 comporte un boîtier 11 traversant une découpe 3 ménagée dans cette planche de bord 2 et étant formé par l'assemblage d'un corps principal creux 11A et d'un couvercle 11B, ainsi qu'un module de projection 12 apte à projeter une image source porteuse d'informations relatives à la conduite et/ou au fonctionnement du véhicule jusqu'à une lame escamotable 13.

Parmi les informations projetées, on peut citer par exemple la vitesse du véhicule, la vitesse maximale autorisée sur la voie de circulation empruntée, le nombre de kilomètres effectués depuis la dernière mise à zéro du compteur kilométrique journalier, l'autonomie du véhicule en terme de quantité de carburant ou de kilomètres, des alertes relatives au distances de sécurité ou au respect de la voie de circulation, ou encore des aides au stationnement.

Le module de projection 12 comporte un projecteur constitué par exemple par un afficheur à cristaux liquides (LCD) associé à une source lumineuse rétro-éclairante, ainsi qu'un système optique doté notamment de plusieurs miroirs de déviation aptes à renvoyer le faisceau lumineux issu du projecteur sur la lame semi-réfléchissante 4.

Cette lame 13 est suffisamment réfléchissante pour renvoyer une partie des rayons lumineux provenant de ce module de projection 12 vers le conducteur de sorte que ce dernier visualise les informations projetées sous la forme d'une image virtuelle située quelques mètres au devant du véhicule dans une zone surmontant le capot ou la route et sans modification de l'accommodation des yeux.

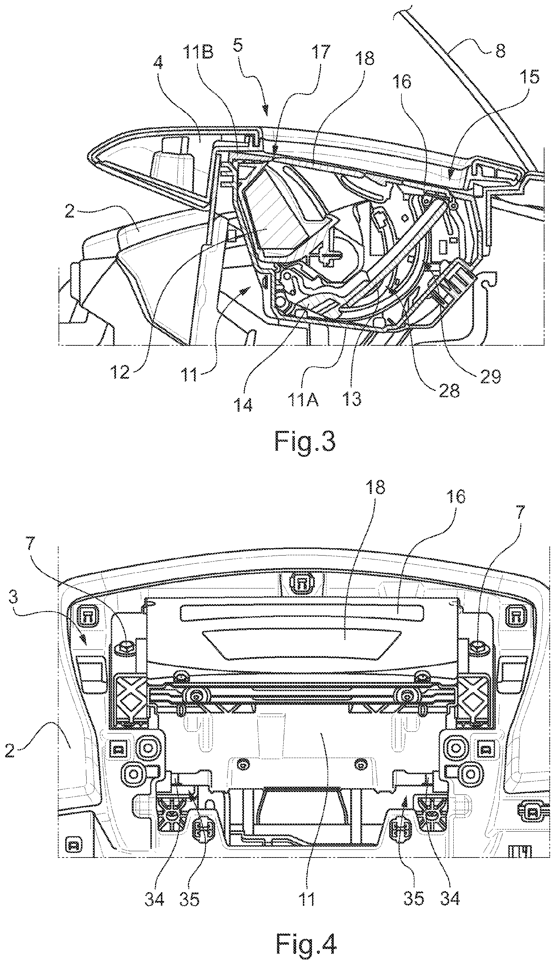

La lame 13 est montée rigidement sur un support mobile 14 apte à se déplacer entre une position de rangement située sous le module de projection 12 et au moins une position d'affichage, de sorte que cette lame 13 soit escamotée à l'intérieur du boîtier 11 lorsque le support mobile 14 occupe sa position de rangement (figures 3 et 4) et qu'elle soit déployée hors du boîtier 11 en traversant une première fenêtre 15 ménagée dans le couvercle 11B du boîtier 11 lorsque ce support mobile 14 occupe sa position d'affichage (figures 1, 2 et 5).

Le dispositif d'affichage 10 comporte également un volet 16 monté mobile entre une première position de fermeture dans laquelle il couvre la fenêtre 15 du boîtier 11, et une seconde position d'ouverture dans laquelle il est ouvert vers l'extérieur de ce boîtier 11 pour libérer le passage de la lame 13.

Comme illustré sur les figures, une seconde fenêtre 17 est ménagée dans le couvercle 11B du boîtier 11 derrière la première fenêtre 15 afin de permettre au faisceau lumineux issu du module de projection 12 de traverser ce couvercle 11B pour atteindre la lame 13 lorsqu'elle est déployée.

Le dispositif d'affichage 10 comporte en outre une trappe 18 monté mobile entre une première position de fermeture dans laquelle il couvre cette fenêtre 17, et une seconde position d'ouverture dans laquelle il est ouvert vers l'intérieur de ce boîtier 11 pour libérer le passage du faisceau lumineux.

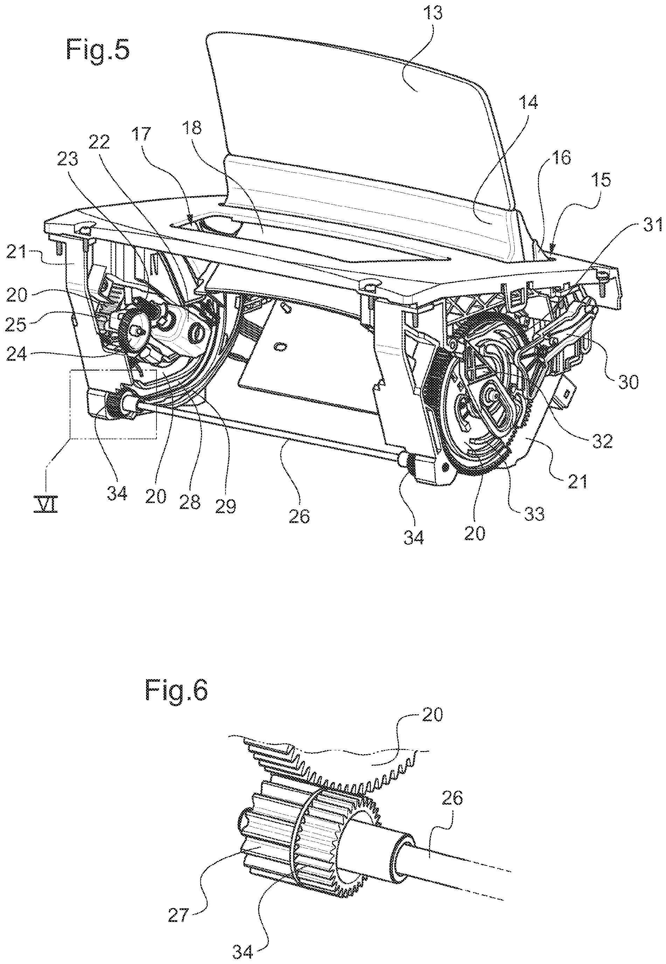

Le déplacement du support mobile 14 portant la lame 13 est assuré par un mécanisme motorisé à engrenage logé dans le boîtier 11 visible en partie sur la figure 5.

Ce mécanisme comporte deux roues dentées 20 montées à rotation sur deux châssis latéraux respectifs 21 fixés au boîtier 11 et s'étendant de part et d'autre de ce support 14 (figure 5).

L'une des roues dentées 20 est entrainable à rotation autour d'un axe transversal par un moteur électrique 22 associé à un système réducteur comprenant une vis sans fin 23 portée par l'arbre de ce moteur 22 et en prise avec une couronne tangente dentée 24 liée en rotation avec un pignon 25 engrainé sur cette roue dentée 20.

Les deux roues dentées 20 sont solidaires en rotation l'une de l'autre par l'intermédiaire d'une tige de synchronisation transversale 26 s'étendant entre les deux coins inférieurs arrière des châssis latéraux 21 sur lesquels elle est montée à libre rotation, cette tige 26 portant fixement à ses deux extrémités opposées deux pignons 27 engrainés chacun sur une roue dentée correspondante 20 (figure 6).

Chaque roue dentée 20 est articulée avec le support mobile 14 par l'intermédiaire d'un premier pion transversal (non visible sur les figures) ménagé sur une extrémité latérale respective de ce support 14 et monté coulissant sur un chemin de came (non visible sur les figures) ménagé sur la face interne d'une roue dentée 20 correspondante.

Chacune des extrémités latérales de ce support mobile 14 comporte en outre deux autres pions transversaux (non visibles sur les figures) montés coulissants le long de deux glissières courbes 28, 29 ménagées sur la face interne d'un châssis latéral 21 correspondant (figures 2, 3 et 5).

On comprend que l'actionnement du moteur 22 provoque la rotation des deux roues dentées 20 qui entraine en mouvement le support 14 dont le déplacement est guidé par le coulissement des pions transversaux le long des glissières 28, 29.

Le dispositif d'affichage 10 comporte également des moyens pour couper automatiquement l'alimentation du moteur électrique 22 lorsque le support mobile 14 atteint l'une des ses deux positions de fin de course (celle de rangement ou celle d'affichage).

Ces moyens de coupure non représentés sur les figures peuvent par exemple comprendre un capteur de courant à effet Hall associé à deux mires magnétiques.

Les déplacements du volet 16 et de la trappe 18 sont commandés par des mécanismes couplés au mécanisme motorisé assurant le déplacement du support 14 de la lame 13, de sorte que ce volet 16 et cette trappe 18 s'ouvrent lorsque le support 14 se déplace de sa position de rangement à sa position d'affichage, et vice-versa.

Le mécanisme de commande du volet 16 comporte deux bielles latérales 30 s'étendant de part et d'autre de ce support 14 et montées chacune à rotation sur un châssis latéral correspondant 21 ; chaque bielle 30 comprenant à une première extrémité un pion transversal (non visible sur les figures) coopérant avec un chemin de came respectif 31 ménagé sur la face externe d'une roue dentée correspondante 20, et ayant son autre extrémité articulée à rotation sur une extrémité latérale de ce volet 16 (figure 5).

Le mécanisme de commande de la trappe 18 comporte deux bielles latérales 32 s'étendant de part et d'autre de ce support 14 et montées chacune à translation sur un châssis latéral correspondant 21 ; chaque bielle 32 comprenant à une première extrémité un pion transversal (non visible sur les figures) coopérant avec un chemin de came respectif 33 ménagé sur la face externe d'une roue dentée correspondante 20 (figure 5), et ayant son autre extrémité articulée à rotation sur un organe de liaison lui-même articulé sur une extrémité latérale de cette trappe 18.

Comme illustré sur les figures 1 à 3 et pour des raisons esthétiques, la planche de bord 2 est surmontée, au niveau de la découpe 3 recevant le dispositif d'affichage 10, d'une visière d'habillage 4 destinée à masquer partiellement ce dispositif d'affichage 10 ainsi que les points de fixation de ce dernier sur la structure 6 du véhicule en dessous de cette planche de bord 2.

Cette visière 4 présente une ouverture 5 destinée à permettre le passage des rayons lumineux émis par le module de projection 2 et celui de la lame 13 lors de son déploiement hors du boîtier 11.

En cas de défaillance du moteur électrique 22 du mécanisme assurant le déplacement du support 14 de la lame 13, il est nécessaire de pouvoir extraire le dispositif tête haute 10 de la planche de bord 2 afin de le réparer ou le remplacer.

Or, pour avoir accès aux vis de fixation 7 du boîtier 11 sur la structure 6, la visière d'habillage 4 doit être préalablement retirée, ce qui n'est malheureusement pas possible lorsque le support 14 occupe sa position d'affichage du fait de la proximité entre l'extrémité supérieure de la lame 13 et le pare-brise 8 (figure 2).

Afin de permettre un escamotage au moins partiel de la lame 13 et suffisant pour que cette dernière ne s'oppose plus au retrait de la visière 4, le dispositif d'affichage selon l'invention 10 comporte des moyens permettant à l'opérateur en charge du démontage de commander manuellement le mécanisme gérant déplacement du support 14 portant cette lame 13.

Ces moyens comportent deux roulettes 34 montées fixement sur la tige de synchronisation transversale 26 contre la face interne les deux pignons 27 avec lesquels elles sont solidaires en rotation.

Comme illustré sur la figure 6, la surface externe périphérique de chaque roulette 34 présente une pluralité de crans moletés destinés à faciliter leur manipulation par le doigt d'un opérateur.

Chaque roulette 34 est venue de préférence d'une seule pièce avec un pignon 27 correspondant, avantageusement par moulage à partir d'un matériau thermoplastique ; les deux sous-ensembles roulette 34 - pignon 17 étant emmanchés à force aux deux extrémités de la tige de synchronisation 26 (figure 6).

Afin de permettre la manipulation des deux roulettes 34 depuis l'extérieur du boîtier 11, son corps principal creux 11A présente, à proximité de ses deux coins inférieurs arrière, deux renfoncements 35 s'étendant jusqu'au niveau de la tige de synchronisation transversale 26 et dans chacun desquels est ménagé une fenêtre (non visible sur les figures) partiellement traversée par une roulette correspondante 34.

Pour avoir accès à la zone inférieure arrière du boîtier 11, l'opérateur doit simplement retirer préalablement le combiné d'instruments (non représenté sur les figures) implanté en façade de la planche de bord 2 sous la visière 4, de sorte à se retrouver dans la configuration illustrée par les figures 1 et 2.

Il peut alors glisser ses deux mains sous la planche de bord 2 puis introduire deux de ses doigts dans les deux renfoncements 35 pour entrainer simultanément à rotation les deux roulettes 34 de sorte à provoquer le déplacement du support 14 portant la lame 13 vers sa position de rangement.

On notera que la présence de deux roulettes 34 permet de réduire l'effort à appliquer sur ces dernières pour les entrainer à rotation avec la tige de synchronisation 26.

N'étant pas nécessaire que le support 14 atteigne cette position de rangement pour permettre le retrait de la visière 4, l'opérateur pourra cesser de manipuler les roulettes 34 dès que l'extrémité supérieure de la lame 13 se sera éloignée suffisamment du pare-brise 8.

Après le retrait de la visière 4, les vis de fixation 7 du boîtier 11 sur la structure 6 deviennent accessibles et l'opérateur peut facilement extraire le dispositif d'affichage 10.

Selon des variantes de réalisation non représentées, le dispositif d'affichage à lame escamotable est de type différent. Ce dernier peut par exemple être dépourvu de module de projection tête-haute tandis que la lame rétractable est constituée par un écran d'affichage tactile de type LCD permettant au conducteur ou au passager avant de naviguer dans une arborescence de menus lui donnant accès à la commande de nombreux dispositifs du véhicule tels les modules de navigation, de ventilation/climatisation, de télécommunication, les systèmes audio et multimédia, l'aide à la conduite, ou encore la connectivité vers l'extérieur du véhicule.

Selon d'autres variantes de réalisation non représentés de l'invention, les moyens manuels de commande ne comportent qu'une seule roulette implantée par exemple en partie centrale de la tige de synchronisation.

Selon encore d'autres variantes de réalisation non représentées :
- le mécanisme motorisé à engrenage entrainant le déplacement du support mobile est de type différent (ce dernier comporte par exemple un moteur entrainant au moins un pignon coopérant avec une crémaillère reliée au support de lame) ;
- le dispositif est dépourvu de volet et/ou de trappe d'obturation ; et/ou
- la visière d'habillage est fixe, le démontage du dispositif d'affichage s'effectuant par coulissement longitudinal vers l'arrière au travers de la découpe ménagée en façade de la planche de bord et destinée à recevoir le combiné d'instruments.

D'une manière générale, on rappelle que la présente invention ne se limite pas aux formes de réalisation décrites et représentées, mais qu'elle englobe toute variante d'exécution couverte par les revendications.

## Revendications

1. Dispositif d'affichage à lame escamotable comportant un boîtier (11) destiné à être implanté sur la planche de bord (2) d'un véhicule automobile, ainsi qu'une lame (13) montée sur un support mobile (14) de sorte à pouvoir être déplacée, via un mécanisme motorisé à engrenage logé dans ledit boîtier (11) et comprenant deux pignons (27), entre une position de rangement et au moins une position d'affichage, de sorte que ladite lame (13) soit escamotée à l'intérieur dudit boîtier (11) lorsque ledit support mobile (14) occupe sa position de rangement et qu'elle soit déployée hors dudit boîtier (11) lorsque ce support mobile (14) occupe sa position d'affichage ;
**caractérisé en ce qu'**il comporte des moyens de commande manuels dudit mécanisme comprenant au moins une roulette (34) liée en rotation avec un desdits pignons (27) et accessible depuis l'extérieur dudit boîtier (11), et **en ce que** ledit mécanisme comporte deux roues dentées latérales (20) articulées chacune avec une extrémité latérale correspondante dudit support (14) et étant solidaires en rotation l'une de l'autre par l'intermédiaire d'une tige de synchronisation transversale (26) portant fixement à ses deux extrémités opposées les deux dits pignons (27) engrainés chacun sur une desdites roues dentées latérales (20), ladite tige de synchronisation transversale (26) s'étendant entre deux coins inférieurs arrière de deux châssis latéraux (21) sur lesquels elle est montée à libre rotation.

2. Dispositif d'affichage selon la revendication 1, **caractérisé en ce que** la au moins dite roulette (34) est montée fixement sur ladite tige de synchronisation transversale (26).

3. Dispositif d'affichage selon la revendication 2, **caractérisé en ce que** ledit boîtier (11) présente au moins un renfoncement (35) s'étendant jusqu'au niveau de ladite tige de synchronisation transversale (26) et dans lequel est ménagé une fenêtre partiellement traversée par une dite roulette correspondante (34).

4. Dispositif d'affichage selon l'une des revendications 2 ou 3, **caractérisé en ce que** qu'il comporte deux dites roulettes (34) disposées contre la face interne des deux dits pignons (27).

5. Dispositif d'affichage selon l'une des revendications 3 à 4, **caractérisé en ce que** ledit mécanisme comporte un moteur électrique (22) doté d'un arbre rotatif couplé à l'une des dites roues dentées (20) par un système réducteur (23, 24, 25).

6. Dispositif d'affichage selon l'une des revendications 1 à 5, **caractérisé en ce que** la au moins dite roulette (34) présente une pluralité de crans moletés destinés à faciliter sa manipulation par le doigt d'un opérateur.

7. Dispositif d'affichage selon l'une des revendications 1 à 6, **caractérisé en ce que** la au moins dite roulette (34) est venue d'une seule pièce par moulage avec un dit pignon correspondant (27).

8. Dispositif d'affichage selon l'une des revendications 1 à 7, **caractérisé en ce qu'**il comporte un module de projection tête-haute (12) logé dans le dit boîtier (11) et apte à projeter une image source porteuse d'informations relatives à la conduite et/ou au fonctionnement du véhicule jusqu'à ladite lame (13), cette dernière étant suffisamment réfléchissante pour renvoyer une partie des rayons lumineux provenant dudit module de projection (12) vers le conducteur.

9. Véhicule automobile **caractérisé en ce qu'**il comporte un dispositif d'affichage selon l'une des revendications 1 à 8.

## Patentansprüche

1. Anzeigevorrichtung mit einziehbarem Blatt, umfassend ein Gehäuse (11), das dazu bestimmt ist, auf dem Armaturenbrett (2) eines Kraftfahrzeugs installiert zu werden, sowie ein Blatt (13), das auf einem beweglichen Träger (14) so montiert ist, dass es über einen motorisierten Getriebemechanismus verschiebbar ist, der in dem Gehäuse (11) untergebracht ist und zwei Ritzel (27) umfasst, zwischen einer Aufbewahrungsposition und mindestens einer Anzeigeposition, so dass die Klinge (13) in das Innere des Gehäuses (11) eingezogen ist, wenn der bewegliche Träger (14) seine Aufbewahrungsposition einnimmt, und außerhalb des Gehäuses (11) ausgefahren ist, wenn der bewegliche Träger (14) seine Anzeigeposition einnimmt;
**dadurch gekennzeichnet, dass** sie Mittel zur manuellen Steuerung des Mechanismus umfasst, die mindestens ein Rad (34) umfassen, das drehbar mit einem der Ritzel (27) verbunden und von der Außenseite des Gehäuses (11) zugänglich ist, und dass der Mechanismus zwei seitliche Zahnräder (20) umfasst, die jeweils an einem entsprechenden seitlichen Ende des Trägers (14) angelenkt und mittels einer querverlaufenden Synchronisationsstange (26) drehfest miteinander verbunden sind, die an ihren beiden gegenüberliegenden Enden die beiden Ritzel (27) fest trägt, die jeweils an einem der seitlichen Zahnräder (20) angebracht sind, wobei sich die querverlaufende Synchronisationsstange (26) zwischen zwei hinteren unteren Ecken zweier seitlicher Rahmen (21) erstreckt, an denen sie frei drehbar angebracht ist.

2. Anzeigevorrichtung nach Anspruch 1, **dadurch gekennzeichnet, dass** die mindestens eine der genannten Rollen (34) fest an der genannten Quersynchronisationsstange (26) angebracht ist.

3. Anzeigevorrichtung nach Anspruch 2, **dadurch gekennzeichnet, dass** das Gehäuse (11) mindestens eine Ausnehmung (35) aufweist, die sich bis zur Höhe der Quersynchronisationsstange (26) erstreckt und in der ein Fenster vorgesehen ist, durch das ein entsprechendes Rad (34) teilweise hindurchgeht.

4. Anzeigevorrichtung nach einem der Ansprüche 2 oder 3, **dadurch gekennzeichnet, dass** sie zwei der genannten Räder (34) umfasst, die an der Innenfläche der beiden genannten Ritzel (27) angeordnet sind.

5. Anzeigevorrichtung nach einem der Ansprüche 3 bis 4, **dadurch gekennzeichnet, dass** der Mechanismus einen Elektromotor (22) mit einer Drehwelle umfasst, die über ein Untersetzungsgetriebe (23, 24, 25) mit einem der Zahnräder (20) gekoppelt ist.

6. Anzeigevorrichtung nach einem der Ansprüche 1 bis 5, **dadurch gekennzeichnet, dass** die mindestens eine der genannten Rollen (34) eine Vielzahl von gerändelten Einkerbungen aufweist, die ihre Handhabung durch den Finger einer Bedienperson erleichtern sollen.

7. Anzeigevorrichtung nach einem der Ansprüche 1 bis 6, **dadurch gekennzeichnet, dass** das mindestens eine Rad (34) mit einem entsprechenden Ritzel (27) einstückig angeformt ist.

8. Anzeigevorrichtung nach einem der Ansprüche 1 bis 7, **dadurch gekennzeichnet, dass** sie ein Head-up-Projektionsmodul (12) umfasst, das in dem Gehäuse (11) untergebracht ist und in der Lage ist, ein Quellenbild, das Informationen bezüglich des Fahrens und/oder des Betriebs des Fahrzeugs trägt, auf die Schaufel (13) zu projizieren, wobei letztere ausreichend reflektierend ist, um einen Teil der Lichtstrahlen, die von dem Projektionsmodul (12) kommen, zum Fahrer zu reflektieren.

9. Kraftfahrzeug, **dadurch gekennzeichnet, dass** es eine Anzeigevorrichtung nach einem der Ansprüche 1 bis 8 umfasst.

## Claims

1. A display device with a retractable blade comprising a housing (11) intended to be installed on the dashboard (2) of a motor vehicle, as well as a blade (13) mounted on a mobile support (14) so as to be able to be moved, via a motorised gear mechanism housed in the said housing (11) and comprising two pinions (27), between a storage position and at least one display position, so that said blade (13) is retracted inside said case (11) when said mobile support (14) occupies its storage position and is deployed out of said case (11) when said mobile support (14) occupies its display position;
**characterised in that** it comprises means for manually controlling said mechanism comprising at least one wheel (34) rotationally linked with one of said pinions (27) and accessible from the outside of said case (11), and **in that** said mechanism comprises two lateral toothed wheels (20) each articulated to a corresponding lateral end of said support (14) and being fixed in rotation to each other by means of a transverse synchronisation rod (26) carrying fixedly at its two opposite ends the two said pinions (27) each engrained on one of said lateral toothed wheels (20), said transverse synchronisation rod (26) extending between two rear lower corners of two lateral frames (21) on which it is mounted to rotate freely.

2. A display device according to claim 1, **characterised in that** at least said caster (34) is fixedly mounted on said transverse synchronisation rod (26).

3. Display device according to claim 2, **characterised in that** said housing (11) has at least one recess (35) extending to the level of said transverse synchronisation rod (26) and in which is provided a window partially traversed by a corresponding said wheel (34).

4. Display device according to one of claims 2 or 3, **characterised in that** it comprises two said wheels (34) arranged against the inner face of the two said pinions (27).

5. A display device according to one of claims 3 to 4, **characterized in that** said mechanism comprises an electric motor (22) having a rotary shaft coupled to one of said gear wheels (20) by a reduction gear system (23, 24, 25).

6. A display device according to one of claims 1 to 5, **characterised in that** at least the at least one wheel (34) has a plurality of knurled notches intended to facilitate its handling by an operator's finger.

7. A display device according to one of claims 1 to 6, **characterised in that** the at least one wheel (34) is moulded in one piece with a corresponding pinion (27).

8. Display device according to one of claims 1 to 7, **characterised in that** it comprises a head-up projection module (12) housed in said casing (11) and capable of projecting a source image carrying information relating to the driving and/or operation of the vehicle to said blade (13), the latter being sufficiently reflective to reflect some of the light rays coming from said projection module (12) back towards the driver.

9. Motor vehicle **characterised in that** it has a display device according to one of claims 1 to 8.
